# EUROPÄISCHE PATENTANMELDUNG

(11) **EP 0 776 796 A2**
(43) Veröffentlichungstag der Anmeldung: **04.06.1997**
(21) Anmeldenummer: 96119171.5
(22) Anmeldetag: 29.11.1996
(51) Int. Cl.: B60R 21/26

(54) **Pyrotechnischer Gasgenerator**

(30) Priorität: 30.11.1995 DE 19544784
(71) Anmelder: HS Technik und Design Technische Entwicklungen GmbH, 82234 Wessling (DE)
(72) Erfinder: Specht, Martin, 82340 Feldafing (DE); Arold, Jürgen, 82276 Adelzhofen (DE)
(74) Vertreter: Nöth, Heinz, Dipl.-Phys.

(57) **Zusammenfassung**

Die Erfindung betrifft einen pyrotechnischen Gasgenerator mit einem Gehäuse 1, einem im Gehäuse 1 angeordneten Treibmittelsatz mit mindestens zwei Treibmittelladungen 9, 13 und einer Zündeinrichtung 5 für den Treibmittelsatz, der nach Zündung durch die Zündeinrichtung 5 ein aus dem Gehäuse 1 austretendes Antriebsgas erzeugt, wobei die Zündeinrichtung 5 eine Initialladung 9 des Treibmittelsatzes zündet, deren Druckgas als Initial-Antriebsgas für eine erste Antriebswirkung durch eine Gehäuseöffnung 26 aus dem Gehäuse 1 austritt, und wobei eine Zündsteuereinrichtung 24 am Treibmittelsatz vorgesehen ist, welche die Zündung einer Hauptladung 13 durch das Druckgas der Initialladung 9 zeitlich derart steuert, daß das Druckgas der Hauptladung 9 als Haupt-Antriebsgas mit Zeitverzug durch die Gehäuseöffnung 26 austritt und additiv zu dem Druckgas der Initialladung 9 eine im wesentlichen kontinuierlich bis auf einen Maximalwert ansteigende Gesamtantriebswirkung bereitstellt. Die Zündsteuereinrichtung 24 kann eine Grenzwand 18 der Hauptladung 13 umfassen, die zumindest eine Öffnung 25 zur Zündung der Hauptladung 13 durch das Druckgas der Initialladung 9 aufweist.

## Beschreibung

Die Erfindung betrifft einen pyrotechnischen Gasgenerator mit den Merkmalen des Oberbegriffs des Anspruchs 1.

Aus der DE 42 28 696 A1 ist ein derartiger Gasgenerator bekannt, in dessen Gehäuse in Längsrichtung hintereinander eine Zündeinrichtung an einem Gehäuseende, eine erste Treibladung und schließlich eine zweite Treibladung benachbart zu einer Austrittsöffnung am anderen Gehäuseende angeordnet sind, so daß von der Zündeinrichtung die erste Treibladung gezündet wird und durch deren Expansion die zweite Treibladung gezündet wird.

Aufgabe der vorliegenden Erfindung ist es, einen pyrotechnischen Gasgenerator der eingangs genannten Art zu verbessern, so daß der Verlauf des Druckanstiegs des erzeugten Druck- oder Antriebsgases im Hinblick auf anzutreibende Teile optimiert ist.

Diese Aufgabe wird erfindungsgemäß durch einen pyrotechnischen Gasgenerator mit den Merkmalen des Anspruchs 1 gelöst. Vorteilhafte Ausgestaltungen der Erfindung sind in den abhängigen Ansprüchen angegeben.

Durch den Austritt des Druckgases der Initialladung stellt der Gasgenerator ein erstes Antriebsgas bereit, das vergleichsweise sanft einsetzt und somit einen Druckverlauf erzeugt, der bewegliche Bauteile ohne extrem große Belastungsspitzen mit beschädigender oder zerstörender Wirkung anfänglich antreiben oder aufblasen kann. Beim Abbrennen des Treibmittels der Initialladung steigt der Druck des Druckgases an. Die Zündsteuereinrichtung bewirkt, daß das Druckgas bei Überschreiten eines Grenzwertes die Hauptladung zündet, deren Druckgas mit derart eingestellter Zeitverzögerung vor dem Abfall des Druckes der Initialladung einsetzt, so daß sich die Gesamtwirkung des aus dem Gehäuse des zwei- oder mehrstufigen Gasgenerators austretenden Druck- oder Antriebsgases kontinuierlich und ohne übermäßige Druckspitzen entwickeln kann. Die Zündsteuereinrichtung kann beispielsweise Sensoren enthalten, die den Druckanstieg messen und eine Zündung der Hauptladung veranlassen. In einer vorteilhaften Ausgestaltung umfaßt die Zündsteuereinrichtung eine die Hauptladung begrenzende Trenn- oder Grenzwand, in der eine oder mehrere Öffnungen oder Bohrungen enthalten sind, durch die das von der Initialladung erzeugte Druckgas hindurch auf die Hauptladung einwirken kann und deren Zündung auslösen kann. Somit sind für die Zündsteuereinrichtung keine bewegliche mechanische oder elektrische Teile erforderlich, die die Funktionsfähigkeit beeinträchtigen könnten.

Das Gehäuse des Gasgenerators kann rechteckig oder zylindrisch, insbesondere rotationssymmetrisch ausgebildet sein, wobei der Gasaustritt auch auf zwei oder mehrere Gehäuseöffnungen aufgeteilt sein kann. Zweckmäßigerweise ist das Gehäuse eine hülsenförmige Kartusche, die an einem Ende die Zündeinrichtung und am gegenüberliegenden Ende die Gehäuseöffnung zum Austritt des Druckgases aufweist. Eine solche Kartusche läßt sich einfach und kostengünstig herstellen, insbesondere wenn sie ein rotationssymmetrisches Teil ist. Gemäß einem Ausführungsbeispiel ist die Gehäuseöffnung für den Druckgasaustritt vor Zündung der Treibmittelladungen geschlossen. Dann sind die Treibmittelladungen gegen Umwelteinflüsse geschützt. Bei Zündung des Gasgenerators wird der Verschluß der Gehäuseöffnung durch die Druckkraft der Initialladung geöffnet. Der Verschluß der Gehäuseöffnung kann ein eingesetztes und an der Kartusche befestigtes Verschlußteil wie z. B. ein Deckel sein. Zweckmäßigerweise wird jedoch der Vorderteil der Kartuschenwand derart zusammengepreßt und verformt, daß die Kartuschenwand den öffenbaren Verschluß der Gehäuseöffnung bildet. Die Kartuschenwand kann derart ausgebildet sein, daß die Initialladung sogleich den maximalen Öffnungsquerschnitt öffnet. Gemäß einer weiteren Ausgestaltung wird durch die Initialladung nur ein erster kleinerer Querschnitt geöffnet, der durch die Hauptladung auf den maximalen Querschnitt geöffnet wird. Damit läßt sich der Druckanstiegsverlauf beeinflussen. Schwächungen der Wandstärke, Einkerbungen in der Wand oder dergleichen an definierten Stellen können die gewünschte Verformung der Außenwand der Kartusche unterstützen.

Gemäß einer vorteilhaften Ausgestaltung der Erfindung ist die Hauptladung in einem der Gehäuseöffnung benachbarten Hohlraum des Gehäuses und die Initialladung in einem in Richtung der Zündeinrichtung an den Hohlraum der Hauptladung angrenzenden weiteren Hohlraum des Gehäuses enthalten, wobei die Hauptladung ein Sekundärgehäuse aufweist, das zumindest einen von der Grenzwand begrenzten Strömungskanal im Hohlraum zum Abströmen des Druckgases von der Initialladung zur Gehäuseöffnung freiläßt. Diese Gestaltung bildet einen definierten Gasabströmungsweg über einen beliebig, jedoch möglichst strömungsgünstig geführten Strömungskanal an der Hauptladung vorbei. Die Hauptladung ist von dem Strömungskanal durch die Grenzwand getrennt, in der die Öffnungen der Zündsteuereinrichtung enthalten sind.

Zweckmäßigerweise ist das Sekundärgehäuse als napfartiger Ring mit einem zentralen axialen Strömungskanal ausgebildet, da dann das Druckgas der Initialladung auf kürzestem Wege axial aus dem Gehäuse abströmt und dabei die Hauptladung zünden kann. Jedoch kann der Strömungskanal auch als Ringkanal ausgebildet sein, der ein zylindrisches Sekundärgehäuse umgibt. Ein Teil der Initialladung kann auch in einem Teil des Strömungskanals enthalten sein, so daß eine größere Treibladung der Initialladung bei gleichen Kartuschengehäuseabmessungen untergebracht werden kann. Zur Steuerung des Druckverhaltens des Gasgenerators bzw. des Verlaufs des Druckanstiegs können einerseits die Menge der Treibmittelladung in der Initial- und der Hauptladung sowie die Art des Treibmittels, z. B. die Abbrenngeschwindigkeit, variiert werden. Andererseits kann auch die Zündsteuereinrichtung durch Variation der Anzahl, der Positionierung und der Durchmesser der Öffnungen in der Grenzwand die Druckgasentwicklung und somit das Druckverhalten beeinflussen. Schließlich bietet auch die Gestaltung der Spitze der Kartusche und das Öffnungsverhalten des Verschlusses der Gehäuseöffnung die Möglichkeit der Beeinflussung des Druckverhaltens.

Die beschriebene Hauptladung kann auch auf mehrere Einzelladungen aufgeteilt sein, die gemeinsam oder nacheinander von der Zündsteuereinrichtung gezündet werden können, um ein optimales Druckverhalten zu erreichen.

Nachfolgend wird die Erfindung anhand eines Ausführungsbeispiels unter Bezugnahme auf Zeichnungen näher beschrieben. Es zeigt:
- Fig. 1: in vergrößerter Querschnittsansicht einen erfindungsgemäßen Gasgenerator;
- Fig. 2: in schematischer Darstellung einen Ausschnitt der Fig. 1 mit teilweise geöffneter Gehäuseöffnung für einen Gasaustritt; und
- Fig. 3: eine Ansicht gemäß Fig. 2 mit vollständig geöffneter Gehäuseöffnung.

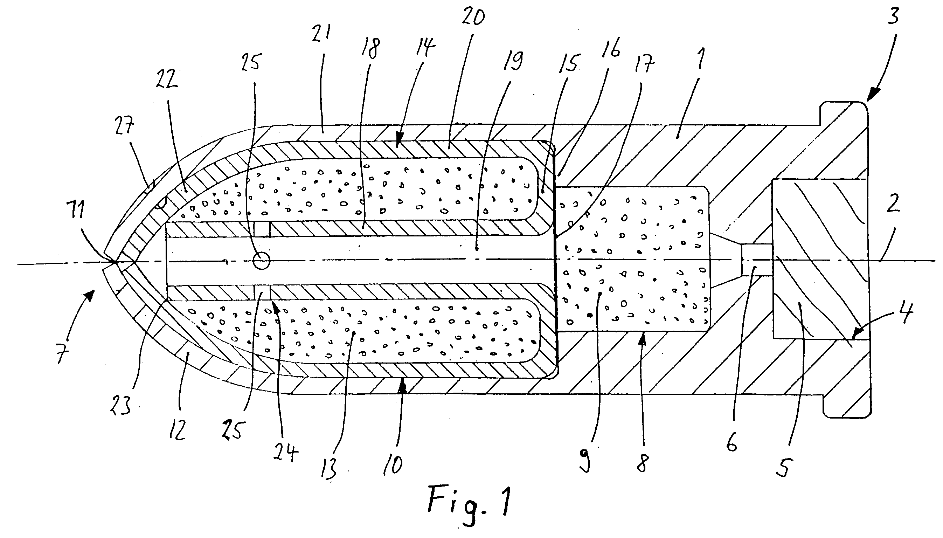

Das in Fig. 1 dargestellte Ausführungsbeispiel eines pyrotechnischen Gasgenerators enthält ein Kartuschengehäuse 1, das bezüglich seiner Längsachse 2 rotationssymmetrisch ist. An seinem Hinterende 3 (rechtes Ende gemäß Fig. 1) weist das Kartuschengehäuse 1 eine Ausnehmung 4 auf, in der eine Zündeinrichtung 5 bekannter Bauart mit einem elektrischen oder mechanischen Zünder mit einer Zündladung angeordnet ist. An die Ausnehmung 4 schließt sich ein axialer Zündkanal 6 in Richtung zum Vorderende 7 (linkes Ende gemäß Fig. 1) des Kartuschengehäuses 1 an. Der Zündkanal 6 mündet in einen ersten Hohlraum 8, in dem eine erste Trebmittelladung oder Initialladung 9 eines Treibmittelsatzes des Gasgenerators angeordnet ist. An den ersten Hohlraum 8 schließt sich ein zweiter Hohlraum 10 von bezüglich dem ersten Hohlraum 8 größerem Querschnitt an. Dieser zweite Hohlraum 10 weist eine in etwa zylindrische Grundform auf und verjüngt sich zum Vorderende 7 des Kartuschengehäuses 1 hin in eine den Hohlraum 10 abschließende Rundung oder eine in Fig. 1 dargestellte Spitze 11, die bei der Herstellung des Gasgenerators z. B. durch Zusammenpressen des vorderen ringförmigen Wandbereiches 12 des Kartuschengehäuses 1 gebildet wird.

Eine zweite Treibmittelladung oder Hauptladung 13 des Treibmittelsatzes ist in einem ringförmigen, napfartigen Sekundärgehäuse 14 enthalten, das in dem zweiten Hohlraum 10 des Kartuschengehäuses 1 angeordnet ist, wobei der Querschnitt des Sekundärgehäuses 14 dem Querschnitt des Hohlraumes 10 angepaßt ist. Ein ringförmiges Bodenwandstück 15 des Sekundärgehäuses 14 liegt an einem Absatz 16 am Übergang vom ersten zum zweiten Hohlraum 8 bzw. 10 an, wobei eine Abdeckscheibe 17 zwischen dem Absatz 14 und dem Bodenwandstück 15 zwischengelegt sein kann, um das z. B. pulverförmige Treibmittel der Initialladung 9 abzudecken und in dem ersten Hohlraum 8 zu halten. Die Abdeckscheibe 17 besteht aus einem durch das Druckgas der Initialladung 9 leicht aufreißbaren Material, z. B. aus Karton, Kunststoff oder dergleichen.

Das Sekundärgehäuse 14 weist eine rohrförmige innere Trenn- oder Grenzwand 18 auf, die einen zentralen axialen Längskanal 19 durch die Hauptladung 13 und somit eine innenseitige Abgrenzung der Hauptladung 13 zu dem Längskanal 19 hin bildet. Eine ringförmige Außenwand 20 des Sekundärgehäuses 14 liegt an einer den zweiten Hohlraum 10 umgebenden Außenwand 21 des Kartuschengehäuses 1 an, ist in ihrem Vorderabschnitt 22 an die Innenseite der sich verjüngenden Außenwand 21 des Kartuschengehäuses 1 angepaßt und kann auch, wie dargestellt, in axialer Richtung zum Vorderende 7 hin über die innere Grenzwand 18 hinausstehen. Der Vorderabschnitt 22 der Außenwand 20 wird bei der Herstellung der aus der Hauptladung 13 mit ihrem Sekundärgehäuse 14 bestehenden Einheit symmetrisch zur Längsachse 2 in die Form einer Geschoßspitze verformt, so daß der ringförmige Innenraum für die Hauptladung 13 durch Kontakt des Vorderabschnittes 22 der Außenwand 20 mit dem Vorderrand 23 der inneren Grenzwand 18 in axialer Richtung abgeschlossen wird und auch der Längskanal 19 durch Zusammenpressen der Außenwand 20 in der Spitze weitgehend oder vollständig geschlossen wird.

Bei der Fertigung des Gasgenerators wird, wie schon angesprochen, nach dem Einsetzen des Sekundärgehäuses 14 in das Kartuschengehäuse 1 der vordere ringförmige Wandbereich 12 des Kartuschengehäuses 1 in Richtung zur Längsachse 2 hin verformt, wobei sich die Kartuschenaußenwand 21 an den Vorderabschnitt 22 der Außenwand 20 des Sekundärgehäuses 14 anpaßt und somit die ursprüngliche Öffnung des Hohlraumes 10 schließt.

Das Sekundärgehäuse 14 enthält eine Zündsteuereinrichtung 24, die in der rohrförmigen inneren Grenzwand 18 mehrere radiale, am Umfang der Grenzwand 18 gleichmäßig verteilte Durchgangsbohrungen oder Öffnungen 25 aufweist, die in der Nähe des offenen Vorderendes des Längskanals 19 angeordnet sind. Gemäß der Darstellung in Fig. 1 sind beispielhaft vier Öffnungen 25 vorgesehen, jedoch kann die Anzahl und die Anordnung sowie auch der jeweilige Durchmesser der Öffnungen 25 variiert werden, um ein gewünschtes Ansprechen oder Zündverhalten der Zündsteuereinrichtung 24 zu erhalten.

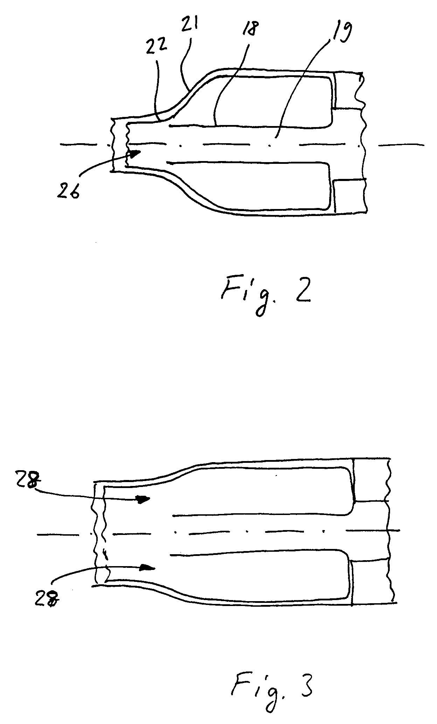

Bei Auslösung der Zündeinrichtung 5 zündet ihre Zündladung über den Zündkanal 6 die Initialladung 9. Das beim Abbrennen des Treibmittels entstehende Druckgas zerreißt die Abdeckscheibe 17 und strömt durch den Längskanal 19 in Richtung zum Vorderende 7 des Kartuschengehäuses 1. Die Druckgasfront trifft auf die Innenseite der einwärts gebogenen Außenwand 22 des Sekundärgehäuses 14 und drückt diese zusammen mit dem vorderen Wandabschnitt 12 des Kartuschengehäuses 1 nach außen, wobei sich eine Öffnung 26 (siehe schematisierte Darstellung in Fig. 2) zum Ausströmen des Druckgases bildet. Einkerbungen oder Schwächungen 27 können an den Außenwänden 21 bzw. 22 vorgesehen sein, um das Aufbiegen der Außenwände21, 22 an definierten Stellen zu fördern. Die Spitze 11 kann auch mit einer kleinen Anfangsöffnung 26 gefertigt sein, so daß eine erste Druckgasmenge austreten kann, bevor das Aufbiegen der beiden Außenwände 21, 22 erfolgt. Während die Druckgasfront durch den Längskanal 19 strömt, passiert sie die Öffnungen 25 der Zündsteuereinrichtung 24, durch die sie auf die Hauptladung 13 trifft und diese entzündet. Aufgrund einer kurzen Verzögerung bis zur Zündung setzt die Druckgasbildung der Hauptladung 13 erst dann ein, nachdem das Druckgas der Initialladung 9 die Gehäuseöffnung 26 aufgeweitet hat und eine erste, vergleichsweise sanft einsetzende Antriebswirkung auf bewegbare Teile, z. B. einer Gurtstraffereinrichtung eines Kraftfahrzeuges oder eines aufzublasenden Airbags, ausgeübt hat.

Das Druckgas der Hauptladung 13 erweitert die Außenwände 21, 22 und vergrößert die vordere Gehäuseöffnung 26, wobei eine ringförmige Öffnung 28 zwischen dem Vorderende 23 der rohrförmigen inneren Grenzwand 18 und der Außenwand 22 entsteht, über die das Druckgas der Hauptladung 13 schnell ausströmen kann. Die beiden sich addierenden Druckverläufe ergeben einen sanften Anstieg der Antriebswirkung durch die Initialladung 9 und einen sich mit definierter Verzögerung anschließenden Einsatz der Hauptladung 13, der zu einem kontinuierlichen Druckanstieg auf einen Maximalwert mit anschließendem hohen Druckniveau beim Abbrennen der Hauptladung 13 führt.

Die Initialladung 9 kann anstatt in zylindrischer Anordnung im Hohlraum 8 auch ringförmig angeordnet sein. Dann ist die Hauptladung 13 in einem in etwa zylindrischen Sekundärgehäuse im Hohlraum 10 angeordnet, wobei der Außendurchmesser des Sekundärgehäuses kleiner ist wie der Innendurchmesser des Hohlraumes 10, so daß ein ringförmiger Strömungskanal für das Druckgas der Initialladung 9 gebildet ist. Die die Hauptladung 13 umgebende äußerer Grenzwand enthält dann die Öffnungen der Zündsteuereinrichtung 24.

## Patentansprüche

1. Pyrotechnischer Gasgenerator mit einem Gehäuse, einem im Gehäuse angeordneten Treibmittelsatz mit mindestens zwei Treibmittelladungen und einer Zündeinrichtung für den Treibmittelsatz, der nach Zündung durch die Zündeinrichtung ein aus dem Gehäuse austretendes Antriebsgas erzeugt,
**dadurch gekennzeichnet,**
daß die Zündeinrichtung (5) eine Initialladung (9) des Treibmittelsatzes zündet, deren Druckgas als Initial-Antriebsgas für eine erste Antriebswirkung durch eine Gehäuseöffnung (26) aus dem Gehäuse (1) austritt, und
daß eine Zündsteuereinrichtung (24) am Treibmittelsatz vorgesehen ist, welche die Zündung einer Hauptladung (13) durch das Druckgas der Initialladung (9) zeitlich derart steuert, daß das Druckgas der Hauptladung (9) als Haupt-Antriebsgas mit Zeitverzug durch die Gehäuseöffnung (26) austritt und additiv zu dem Druckgas der Initialladung (9) eine im wesentlichen kontinuierlich bis auf einen Maximalwert ansteigende Gesamtantriebswirkung bereitstellt.

2. Pyrotechnischer Gasgenerator nach Anspruch 1, dadurch gekennzeichnet, daß die Zündsteuereinrichtung (24) eine Grenzwand (18) der Hauptladung (13) umfaßt, die zumindest eine Öffnung (25) zur Zündung der Hauptladung (13) durch das Druckgas der Initialladung (9) aufweist.

3. Pyrotechnischer Gasgenerator nach Anspruch 1 oder 2, dadurch gekennzeichnet, daß das Gehäuse (1) des Gasgenerators als hülsenförmige Kartusche (1) gestaltet ist und daß die Zündeinrichtung (5) und die Gehäuseöffnung (26) an den beiden gegenüberliegenden Enden des Gehäuses (1) angeordnet sind.

4. Pyrotechnischer Gasgenerator nach einem der Ansprüche 1 bis 3, dadurch gekennzeichnet, daß die Gehäuseöffnung (26) vor Zündung des Gasgenerators geschlossen ist und sich durch die Kraft des Druckgases der Initialladung (9) öffnet.

5. Pyrotechnischer Gasgenerator nach einem der Ansprüche 1 bis 4, dadurch gekennzeichnet, daß der Querschnitt der Gehäuseöffnung (26) vom Druckgas der Hauptladung (13) erweiterbar ist.

6. Pyrotechnischer Gasgenerator nach Anspruch 4 oder 5, dadurch gekennzeichnet, daß der Verschluß der Gehäuseöffnung (26) ein integrales Teil des Gehäuses (1) ist.

7. Pyrotechnischer Gasgenerator nach einem der Ansprüche 1 bis 6, dadurch gekennzeichnet, daß die Hauptladung (13) in einem der Gehäuseöffnung (26) benachbarten Hohlraum (10) des Gehäuses (1) enthalten ist,
daß die Initialladung (9) in einem in Richtung der Zündeinrichtung (5) an den Hohlraum (10) der Hauptladung (13) angrenzenden weiteren Hohlraum (9) des Gehäuses (1) enthalten ist, und
daß die Hauptladung (13) ein Sekundärgehäuse (14) aufweist, das zumindest einen von der Grenzwand (18) begrenzten Strömungskanal (19) im Hohlraum (10) zum Abströmen des Druckgases von der Initialladung (9) zur Gehäuseöffnung (26) freiläßt.

8. Pyrotechnischer Gasgenerator nach Anspruch 7, dadurch gekennzeichnet, daß das Sekundärgehäuse (14) als Napf mit einem zentralen axialen Strömungskanal (19) ausgebildet ist.

9. Pyrotechnischer Gasgenerator nach Anspruch 8, dadurch gekennzeichnet, daß der Strömungskanal ein Ringkanal ist.

10. Pyrotechnischer Gasgenerator nach Anspruch 8, dadurch gekennzeichnet, daß der Ringkanal das Sekundärgehäuse der Hauptladung umgibt.

11. Pyrotechnischer Gasgenerator nach einem der Ansprüche 1 bis 10, dadurch gekennzeichnet, daß eine Abdeckscheibe (17) die Initialladung (9) zur Gehäuseöffnung (26) hin abdeckt.

12. Pyrotechnischer Gasgenerator nach einem der Ansprüche 7 bis 11, dadurch gekennzeichnet, daß die Initialladung (9) zusätzlich im Strömungskanal (19) angeordnet ist.

13. Pyrotechnischer Gasgenerator nach einem der Ansprüche 2 bis 12, dadurch gekennzeichnet, daß die Anzahl, die Lage und die Durchmesser der Öffnungen (25) in der zumindest einen Grenzwand (18) der Zündsteuereinrichtung (24) zum Festlegen des Zündverhaltens der Hauptladung (13) wählbar ist.

14. Pyrotechnischer Gasgenerator nach einem der Ansprüche 1 bis 13, dadurch gekennzeichnet, daß die Hauptladung (13) zumindest zwei Einzelladungen aufweist, wobei die jeweils zuerst gezündete Einzelladung über eine weitere Zündsteuereinrichtung die jeweils nächste Einzelladung zündet.

15. Pyrotechnischer Gasgenerator nach einem der Ansprüche 1 bis 14, dadurch gekennzeichnet, daß die Ladungsmenge und der Ladungstyp der Initialladung und der Hauptladung in Abhängigkeit vom einzustellenden Druckverlauf des austretenden Antriebsgases gewählt ist.

16. Pyrotechnischer Gasgenerator nach einem der Ansprüche 1 bis 15, dadurch gekennzeichnet, daß die Zündeinrichtung (5) eine mechanisch oder elektrisch zündbare Zündladung aufweist.
